# EUROPÄISCHE PATENTANMELDUNG

(11) **EP 2 090 155 A1**
(43) Veröffentlichungstag der Anmeldung: **19.08.2009**
(21) Anmeldenummer: 09001456.4
(22) Anmeldetag: 03.02.2009
(51) Int. Cl.: A01G 9/12

(54) **Pflanzenstütze, insbesondere Orchideenstütze**

(30) Priorität: 12.02.2008 DE 202008001944 U
(71) Anmelder: Scheurich GmbH & Co. KG, 63924 Kleinheubach (DE)
(72) Erfinder: Baumann, Peter, 63927 Bürgstadt (DE)
(74) Vertreter: Hoffmann, Jürgen

(57) **Zusammenfassung**

Eine Pflanzenstütze, die insbesondere als Orchideenstütze ausgebildet sein kann, weist einen senkrecht aufstellbaren Hauptträger und zumindest ein an dem Hauptträger angeordnetes Halteelement, an dem eine Ranke und/oder ein Ast einer Pflanze festlegbar ist, auf. Das Halteelement beinhaltet einen spiralförmig gewundenen Halteträger. Vorzugsweise sind an dem Hauptträger mehrere spiralförmig gewundene Halteträger angeordnet.

## Beschreibung

Die Erfindung betrifft eine Pflanzenstütze, insbesondere eine Orchideenstütze, mit einem senkrecht aufstellbaren Hauptträger und mit zumindest einem an dem Hauptträger angeordneten Halteelement, an dem eine Ranke und/oder ein Ast einer Pflanze festlegbar ist.

Pflanzenstützen sind in unterschiedlichsten Ausgestaltungsformen bekannt. In der allereinfachsten Ausprägung bestehen die Pflanzenstützen aus einen schlichten Stab, an dem beispielsweise mit Blumendraht, Bindfaden oder Clipsen der Stamm bzw. die Ranke der zu stützenden Pflanze befestigt wird. Aus DE 81 11 240.8 U1 ist eine Pflanzenstütze bekannt, die aus stapelbaren Stäben zum Verlängem und aus Querstreben zum Erweitern besteht.

Aus DE 296 15 213 U1 eine Pflanzen-Haltevorrichtung für Pflanzen auf Hochstamm bekannt, die einen stufenlos verstellbaren Stützstab, sowie einen kreisförmigen festen Haltering und einen aufgesteckten Haltering jeweils mit Stiften zur Verdrehsicherung, aufweist.

Aus DE 80 13 282 U1 ist eine Rankhilfe für Kletterpflanzen oder dergleichen bekannt, die aus einem Mittelstab besteht, an welchem an wenigstens zwei einander gegenüberliegenden Seiten in der Höhe gegeneinander versetzt Ösen zum Durchtritt der Ranken angeordnet sind.

Es ist die Aufgabe der vorliegenden Erfindung, eine Pflanzenstütze anzugeben, die ein einfaches Festlegen und wieder Lösen von Ranken, Stämmen oder Ästen von Pflanzen - insbesondere ohne zusätzliche Befestigungsmittel, wie Draht oder Bindfaden oder Clipse - ermöglicht.

Die Aufgabe wird durch eine Pflanzenstütze gelöst, die dadurch gekennzeichnet ist, dass das Halteelement einen spiralförmig gewundenen Halteträger aufweist.

Da die geometrische Figur der Spirale landläufig des öfteren mit der völlig anders geformten Schraube verwechselt wird, sei unterstrichen, dass mit "spiralförmig" im Sinne dieser Erfindung ausdrücklich nicht schraubenförmig gemeint ist. Demgemäss ist der Halteträger vorzugsweise aus einem länglichen, dünnen Element gefertigt, das weitegehend um einen zentralen Punkt oder um eine zentrale Achse verläuft und, je nach Laufrichtung, sich immer weiter von diesem bzw. dieser entfernt oder annähert.

Die erfindungsgemäße Pflanzenstütze kann beispielsweise einfach in den Erdboden gesteckt werden oder auch mit einem Standfuß versehen sein.

Die Erfindung hat den Vorteil, dass mit ein und derselben erfindungsgemäßen Pflanzenstütze Ranken, Stämme oder Äste unterschiedlichster Durchmesser einfach, sicher und zuverlässig festgelegt werden können, ohne dass die Gefahr besteht, die Pflanze zu schädigen oder zu verletzen. Insbesondere sind vorteilhafter Weise keine zusätzlichen Befestigungsmittel, wie Blumendraht, Bast, Bindfaden oder Klammern erforderlich.

Bei einer besonderen Ausführung ist vorgesehen, dass das Halteelement einen in einer Windungsebene spiralförmig gewundenen Halteträger aufweist (ebene Spiralform). Ein besonders leichtes Festlegen der Ranke oder des Stammes einer Pflanze wird dadurch erreicht, dass die Windungsebene relativ zum Hauptträger geneigt angeordnet ist. Demgemäss weist der Hauptträger bei dieser Ausführung einen von 90 Grad abweichenden Winkel, vorzugsweise einen Winkel im Winkelbereich von 80 bis 10 Grad, ganz insbesondere im Bereich von 45 bis 70 Grad, zur Windungsebene auf. Diese Ausführungsform ist insbesondere für Orchideenpflanzen geeignet. Trotzdem der Halteträger unbeweglich an dem Hauptträger angeordnet ist, kann - auf Grund der erfindungsgemäß - relativ zum Hauptträger - schrägen Anordnung der Windungsebene, der Benutzer innerhalb eines vom Grand der Neigung des Halteträgers abhängigen Spielraumes die Höhe bestimmen, an der die Ranke tatsächlich festgelegt wird. Dies ist insbesondere dann ein erheblicher Vorteil wenn Knospen, Zweige oder Triebe der festzulegenden Ranke zufällig auf derselben Höhe liegen sollten, wie Teile des Halteträgers. In einem solchen Fall kann der Benutzer durch geeignetes Positionieren der Ranke bzw. des Stammes innerhalb des spiralförmig gewundenen Halteträgers bewirken, dass die empfindlichen Knospen, Zweige oder Triebe nicht mit dem Halteträger in Konflikt geraten.

Insbesondere für Pflanzen mit ausgeprägterem und/oder dichterem Astwerk kann jedoch vorteilhafter Weise auch vorgesehen sein, dass der Hauptträger einen Winkel von 90 Grad zur Windungsebene aufweist.

Bei einer anderen Ausführung ist vorgesehen, dass das Halteelement einen dreidimensional spiralförmig gewundenen Halteträger aufweist. Beispielsweise kann der Halteträger in Form zumindest eines Teils einer Kugelspirale oder in Form zumindest eines Teils einer Kegelspirale gewunden sein. Diese Ausführung hat den besonderen Vorteil, dass sie zum Festlegen von ganz unterschiedlichen Rankendurchmessern geeignet sind und dass dem Benutzer hinsichtlich der Festelegehöhe der Ranke, trotzdem der Halteträger unbeweglich am Hauptträger befestigt ist, ein Spielraum verbleibt.

Bei einer besonderen Ausführung ist vorgesehen, dass die Windungen des Halteträgers nach innen enger werdend - beispielsweise in Form einer logarithmische Spirale oder in Form einer hyperbolischen Spirale - ausgebildet sind. Diese Ausführung hat den besonderen Vorteil, dass Ranken sehr unterschiedlicher Durchmesser zuverlässig festlegbar sind. Während dickere Ranken weiter außen in dem spiralförmigen Halteträger positioniert werden können, wo der Windungsabstand größer ist, können dünnere Ranken weiter innen, wo der Windungsabstand kleiner ist, zuverlässig und sicher festgelegt werden.

Beispielsweise kann der Halteträger aus einem länglichen Material - beispielsweise einem Draht - hergestellt, insbesondere gebogen, sein. Bei einer besonderen Ausführung verjüngt sich der Querschnitt des länglichen, dünnen Material zu seinem freien Ende hin, was eine Beibehaltung der Spiralgeometrie auch im Zentrum insbesondere für dünne Ranken, Stämme und Äste erlaubt. Darüber hinaus sind auf diese Weise scharfe Kanten (beispielsweise an Drahtabkantungen), die Pflanzenteile verletzen könnten, vermieden. Diese vorteilhafte Besonderheit ist sowohl bei einem aus Draht hergestellten, als auch bei im Spritzgussverfahren hergestellten Pflanzenstützen bzw. Halteträgern einfach herstellbar.

Bei einer besonders flexibel einsetzbaren Ausführung sind mehrere spiralförmig gewundene Halteträger vorgesehen. Diese können beispielsweise in unterschiedlichen Höhen - vorzugsweise seitlich - an dem Hauptträger angeordnet sein. Insbesondere für Pflanzen mit längeren, geraden Ranken oder Stämmen kann vorteilhaft vorgesehen sein, zumindest zwei Halteträger - bezogen auf einen senkrecht aufgestellten Hauptträger - senkrecht übereinander angeordnet sind. Beispielsweise für mehrstämmige Pflanzen kann jedoch alternativ oder zusätzlich vorgesehen sein, dass zumindest zwei Halteträger relativ zueinander mit unterschiedlicher Orientierung an dem Hauptträger angeordnet sind.

Eine seitliche Anordnung des bzw. der Halteträger an dem Hauptträger hat den besonderen Vorteil, dass die festzulegende Ranke, bzw. die festzulegenden Ranken, unabhängig von der Lage des Hauptträgers und unabhängig voneinander auch in weiter innen liegende Windungen der bzw. der Halteträger einführbar sind.

Auch der Hauptträgerträger kann aus einem länglichen Material - beispielsweise einem Draht - hergestellt sein. Bei einer besonderen Ausführung ist vorgesehen, dass der obere Endbereich des Hauptträgers - vorzugsweise zusätzlich zu zumindest einem anderen Halteträger - zu dem spiralförmig gewundenen Halteträger ausgeformt ist. Hierdurch wird der Anbringvorgang zum Befestigen eines Halteträgers im oberen Endbereich unnötig, was geringere Herstellkosten ermöglicht.

Bei einer besonderen Ausführung ist vorgesehen, dass der Halteträger und/oder der Hauptträger als Spritzgussteil - beispielsweise aus Kunststoff - gefertigt sind. Bei einer ganz besonders stabilen und kostengünstig herstellbaren Ausführung ist vorgesehen, dass der Halteträger (bzw. die Halteträger) und der Hauptträger gemeinsam als einstückiges Spritzgussteil gefertigt sind.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine erfindungsgemäße Pflanzenstütze in einer Perspektivansicht,
- Fig. 2: die erfindungsgemäße Pflanzenstütze von oben, und
- Fig. 3: eine andere erfindungsgemäße Pflanzenstütze.

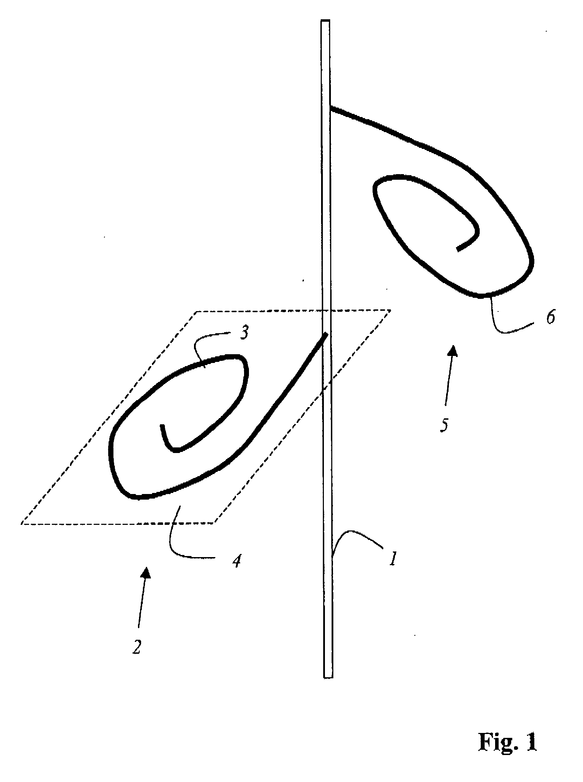

Fig. 1 zeigt eine erfindungsgemäße Pflanzenstütze mit einem senkrecht aufstellbaren Hauptträger 1 und mit einem an dem Hauptträger angeordneten Halteelement 2, an dem eine Ranke und/oder ein Ast einer Pflanze festlegbar ist. Das Halteelement 2 weist einen in einer (gedachten) Windungsebene 4 spiralförmig gewundenen Halteträger 3 auf, der aus einem Draht gebogen ist. Die Windungsebene 4 ist relativ Halteträger 3 geneigt und weist demgemäss einen von 90 Grad abweichenden Winkel, nämlich eine Winkel von 75 Grad, zu diesem auf.

An dem Hauptträger 1 ist ein weiteres Halteelement 5 angeordnet, das einen weiteren spiralförmig gewundenen Halteträger 6 aufweist.

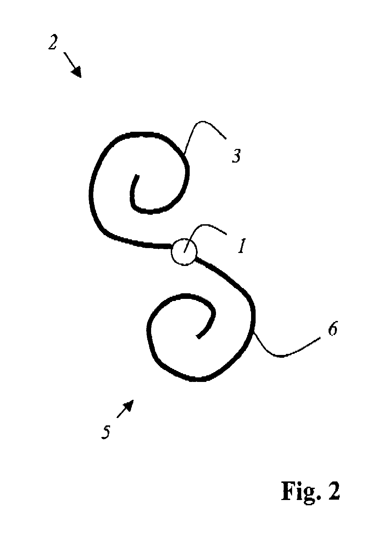

Fig. 2 zeigt die erfindungsgemäße Pflanzenstütze von oben. Es ist in dieser Figur besonders gut zu erkennen, dass der Halteträger 3 und der weitere Halteträger 6 relativ zueinander mit unterschiedlicher Orientierung an dem Hauptträger 1 angeordnet sind.

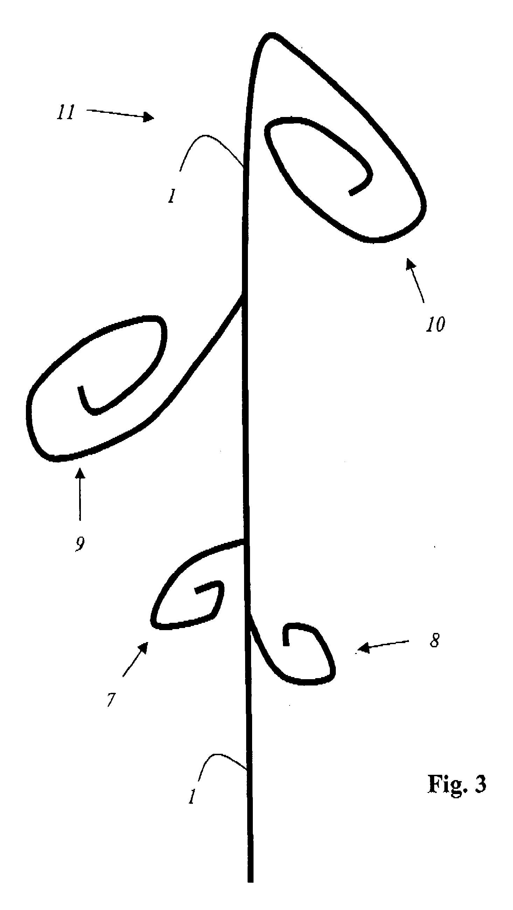

Fig. 3 eine andere erfindungsgemäße Pflanzenstütze. Bei dieser Pflanzenstütze sind mehrere spiralförmig gewundene Halteträger 7, 8, 9, 10 an einem Hauptträger 1 angeordnet. Der Hauptträger 1 kann durch Einstecken in den Boden senkrecht aufgestellt werden. Der spiralförmig gebogene obere Endbereich 11 des Hauptträgers 1 bildet den obersten Halteträger 10.

### Bezugszeichenliste:

- 1: Hauptträger
- 2: Halteelement
- 3: spiralförmig gewundener Halteträger
- 4: Windungsebene
- 5: weiteres Halteelement
- 6: weiteren spiralförmig gewundener Halteträger
- 7: Halteträger
- 8: Halteträger
- 9: Halteträger
- 10: Halteträger
- 11: oberer Endbereich des Hauptträgers 1

## Patentansprüche

1. Pflanzenstütze, insbesondere Orchideenstütze, mit einem senkrecht aufstellbaren Hauptträger und mit zumindest einem an dem Hauptträger angeordneten Halteelement, an dem eine Ranke und/oder ein Ast einer Pflanze festlegbar ist, **dadurch gekennzeichnet, dass** das Halteelement einen spiralförmig gewundenen Halteträger aufweist.

2. Pflanzenstütze nach Anspruch 1, **dadurch gekennzeichnet, dass** das Halteelement einen in einer Windungsebene spiralförmig gewundenen Halteträger aufweist und dass der Hauptträger einen von 90 Grad abweichenden Winkel, vorzugsweise einen Winkel im Winkelbereich von 80 bis 10 Grad, ganz insbesondere im Bereich von 45 bis 70 Grad, zur Windungsebene aufweist.

3. Pflanzenstütze nach Anspruch 1, **dadurch gekennzeichnet, dass** das Halteelement einen in einer Windungsebene spiralförmig gewundenen Halteträger aufweist und dass der Hauptträger einen Winkel von 90 Grad zur Windungsebene aufweist.

4. Pflanzenstütze nach Anspruch 1, **dadurch gekennzeichnet, dass** das Halteelement einen dreidimensional spiralförmig gewundenen Halteträger - beispielsweise in Form eines Teils einer Kugelspirale oder einer Kegelspirale - aufweist.

5. Pflanzenstütze nach einem der Ansprüche 1 bis 4, **dadurch gekennzeichnet, dass** die Windungen des Halteträgers nach innen enger werdend - beispielsweise in Form einer logarithmische Spirale oder in Form einer hyperbolischen Spirale - ausgebildet sind.

6. Pflanzenstütze nach einem der Ansprüche 1 bis 5, **dadurch gekennzeichnet, dass** der Halteträger aus einem länglichen Material - beispielsweise einem Draht - hergestellt, insbesondere gebogen, ist oder dass der Halteträger als Spritzgussteil, beispielsweise aus Kunststoff, gefertigt ist.

7. Pflanzenstütze nach einem der Ansprüche 1 bis 6, **dadurch gekennzeichnet, dass** sich das gewundene Material des Halteträgers zu seinem freien Ende hin verjüngt.

8. Pflanzenstütze nach einem der Ansprüche 1 bis 7, **dadurch gekennzeichnet, dass** mehrere spiralförmig gewundene Halteträger vorgesehen sind.

9. Pflanzenstütze nach einem der Ansprüche 1 bis 8, **dadurch gekennzeichnet, dass** zumindest ein Halteträger seitlich an dem Hauptträger angeordnet ist.

10. Pflanzenstütze nach einem der Ansprüche 8 oder 9, **dadurch gekennzeichnet, dass** mehrere Halteträger in unterschiedlichen Höhen an dem Hauptträger - vorzugsweise seitlich - angeordnet sind.

11. Pflanzenstütze nach einem der Ansprüche 8 bis 10, **dadurch gekennzeichnet, dass** zumindest zwei Halteträger - bezogen auf einen senkrecht aufgestellten Hauptträger - senkrecht übereinander angeordnet sind.

12. Pflanzenstütze nach einem der Ansprüche 8 bis 10, **dadurch gekennzeichnet, dass** zumindest zwei Halteträger relativ zueinander mit unterschiedlicher Orientierung an dem Hauptträger angeordnet sind.

13. Pflanzenstütze nach einem der Ansprüche 1 bis 12, **dadurch gekennzeichnet, dass** der Halteträger und der Hauptträger gemeinsam als einstückiges Spritzgussteil gefertigt sind.

14. Pflanzenstütze nach einem der Ansprüche 1 bis 13, **dadurch gekennzeichnet, dass** der obere Endbereich des Hauptträgers - vorzugsweise zusätzlich zu zumindest einem anderen Halteträger - zu einem spiralförmig gewundene Halteträger ausgeformt ist.
